# EUROPEAN PATENT APPLICATION

(11) **EP 4 579 474 A1**
(43) Date of publication of application: **02.07.2025**
(21) Application number: 23875077.2
(22) Date of filing: 05.09.2023
(51) Int. Cl.: G06F 16/176, H04L 67/06, G06F 3/0484, G06F 3/0481, G06F 3/041, G06F 16/955

(54) **ELECTRONIC DEVICE, METHOD, AND NON-TRANSITORY COMPUTER-READABLE STORAGE MEDIUM FOR SHARING FILE**

(30) Priority: 05.10.2022 KR 20220127415; 12.10.2022 KR 20220130881
(71) Applicant: Samsung Electronics Co., Ltd., Suwon-si, Gyeonggi-do 16677 (KR)
(72) Inventor: OH, Hyomin, Suwon-si Gyeonggi-do 16677 (KR); KIM, Keunsoo, Suwon-si Gyeonggi-do 16677 (KR); KIM, Namil, Suwon-si Gyeonggi-do 16677 (KR); SON, Woonsang, Suwon-si Gyeonggi-do 16677 (KR); JEONG, Hyesoon, Suwon-si Gyeonggi-do 16677 (KR); CHO, Cheolgi, Suwon-si Gyeonggi-do 16677 (KR); CHEON, Jaehong, Suwon-si Gyeonggi-do 16677 (KR); KIM, Sangheon, Suwon-si Gyeonggi-do 16677 (KR); LIM, Yeunwook, Suwon-si Gyeonggi-do 16677 (KR)
(74) Representative: Gulde & Partner
(86) International application number: PCT/KR2023/013285
(87) International publication number: WO 2024/076008

(57) **Abstract**

This processor of an electronic device may display, through a display, a text input field for setting a path part in a uniform resource identifier (URI) within a user interface of a software application for sharing a file of the electronic device, transmit, to a server through a communication circuit, first data indicating a keyword input to the text input field, receive, from the server through the communication circuit, second data indicating the URI, including the path part consisting of the keyword and numerals identified for the keyword, and upload at least one file through the communication circuit for sharing after the second data is received, wherein the updated at least one file may be accessible by using the URI including path part consisting of the keyword and the the numerals.

## Description

### [Technical Field]

The following descriptions relate to an electronic device, a method, and a non-transitory computer readable storage medium for sharing a file.

### [Background Art]

An electronic device may include communication circuitry. For example, the communication circuitry may be configured to support wireless communication between the electronic device and another electronic device. For example, the communication circuitry may be used for cellular communication, wireless fidelity (Wi-Fi) communication, and/or Bluetooth low energy (BLE) communication. For example, the communication circuitry may be used to transmit a file to the other electronic device or receive a file from the other electronic device.

### [Disclosure]

### [Technical Solution]

An electronic device is provided. The electronic device may comprise communication circuitry. The electronic device may comprise a display. The electronic device may comprise a processor. The processor may be configured to display, via the display, in a user interface (UI) of a software application for sharing a file, a text input field for setting a path part in a uniform resource identifier (URI). The processor may be configured to transmit, to a server, through the communication circuitry, first data indicating a keyword inputted to the text input field. The processor may be configured to receive, from the server, through the communication circuitry, second data indicating a URI including the path part that consists of the keyword and numerals, the numerals being identified with respect to the keyword. The processor may be configured to, after the second data is received, upload, through the communication circuitry, at least one file, for sharing. The uploaded at least one file may be accessible using the URI including the path part that consists of the keyword and the numerals.

A method is provided. The method may be executed in an electronic device including communication circuitry and a display. The method may comprise displaying, via the display, in a user interface (UI) of a software application for sharing a file, a text input field for setting a path part in a uniform resource identifier (URI). The method may comprise transmitting, to a server, through the communication circuitry, first data indicating a keyword inputted to the text input field. The method may comprise receiving, from the server, through the communication circuitry, second data indicating a URI including the path part that consists of the keyword and numerals, the numerals identified with respect to the keyword. The method may comprise, after the second data is received, uploading, through the communication circuitry, at least one file, for sharing. The uploaded at least one file may be accessible using the URI including the path part that consists of the keyword and the numerals.

A non-transitory computer readable medium is provided. The non-transitory computer readable medium may store one or more programs. The one or more programs may include instructions which, when executed by a processor of an electronic device comprising communication circuitry and a display, cause the electronic device to display, via the display, in a user interface (UI) of a software application for sharing a file, a text input field for setting a path part in a uniform resource identifier (URI). The one or more programs may include instructions which, when executed by the processor, cause the electronic device to transmit, to a server, through the communication circuitry, first data indicating a keyword inputted to the text input field. The one or more programs may include instructions which, when executed by the processor, cause the electronic device to receive, from the server, through the communication circuitry, second data indicating an URI including the path part that consists of the keyword and numerals, the numerals identified with respect to the keyword. The one or more programs may include instructions which, when executed by the processor, cause the electronic device to, after the second data is received, upload, through the communication circuitry, at least one file, for sharing. The uploaded at least one file may be accessible using the URI including the path part that consists of the keyword and the numerals.

### [Description of the Drawings]

FIG. 1 illustrates an example of an environment including an exemplary electronic device.
FIG. 2 is a simplified block diagram of an exemplary electronic device.
FIG. 3 illustrates an example of a text input field for setting a path part in a uniform resource identifier (URI).
FIG. 4 illustrates an example of items respectively indicating search keywords for identifying a file to be uploaded from among a plurality of files.
FIG. 5 illustrates an example of identifying at least one file using at least a portion of items.
FIG. 6 illustrates an example of generating a new item.
FIG. 7 illustrates an example of a user interface including a text input field.
FIG. 8 illustrates an example of a thumbnail image in an executable object displayed together with information indicating a URI.
FIG. 9 illustrates an example of setting an executable object.
FIG. 10 illustrates an example of modifying a file to be uploaded.
FIG. 11 illustrates an example of a screen for identifying whether to display information indicating a URI using text or using a quick response (QR) code.
FIG. 12 illustrates an example of a list of software applications usable for transmitting information indicating a URI.
FIG. 13 illustrates an example of accessing at least one item using information indicating a URI.
FIG. 14 is a block diagram of an electronic device in a network environment according to various embodiments.
FIG. 15 is a flowchart illustrating a method of transmitting information indicating a URI, which includes a keyword inputted in a text input field and is used for accessing at least one file.

### [Mode for Invention]

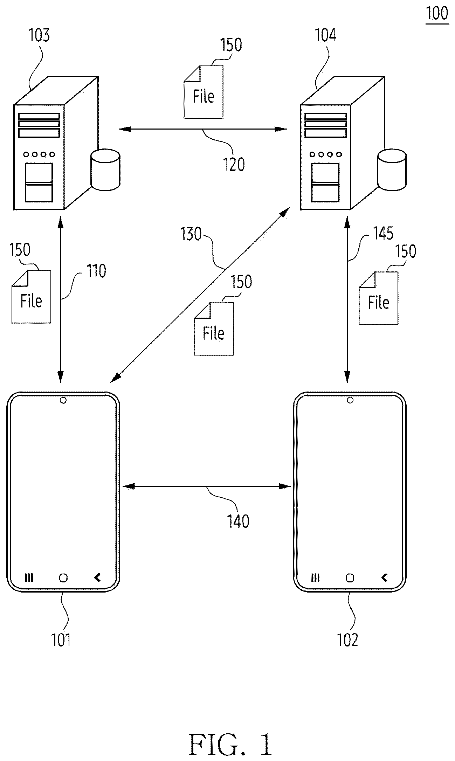

FIG. 1 illustrates an example of an environment including an exemplary electronic device.

Referring to FIG. 1, an environment 100 may include an electronic device 101, another electronic device 102, a first external electronic device 103 (e.g., a server), and a second external electronic device 104 (e.g., another server).

For example, the environment 100 may be an environment for providing a file 150 stored in the electronic device 101 to the other electronic device 102.

For example, the electronic device 101 may transmit the file 150 to the second external electronic device 104 through the first external electronic device 103 or directly to the second external electronic device 104. For example, the second external electronic device 104 may store the file 150. For example, the other electronic device 102 may obtain the file 150 based on accessing the file 150 stored in the second external electronic device 104. For example, the access of the other electronic device 102 to the file 150 may be executed using a uniform resource identifier (URI) 160 obtained from the electronic device 101.

For example, the electronic device 101 may communicate with the first external electronic device 103 through a connection 110 to obtain the URI 160. For example, the electronic device 101 may transmit first data indicating a keyword to the first external electronic device 103 through the connection 110. For example, the first external electronic device 103 may obtain the URI 160 including a path part consisting of the keyword and numerals identified with respect to the keyword (or identified for the keyword) based on the first data. For example, the first external electronic device 103 may transmit second data indicating the URI 160 to the electronic device 101.

For example, the electronic device 101 may upload the file 150 based on the second data.

For example, the file 150 may be uploaded to the second external electronic device 104 through the first external electronic device 103. For example, the electronic device 101 may transmit the file 150 to the first external electronic device 103 through the connection 110. For example, the first external electronic device 103 may transmit information on the file 150 and information on the URI 160 to the second external electronic device 104 through a connection 120. For example, the second external electronic device 104 may store the file 150 based on the URI 160. For example, the file 150 stored in the second external electronic device 104 may be accessible using the URI 160.

For example, the file 150 may be directly uploaded to the second external electronic device 104. For example, the electronic device 101 may receive information for accessing the second external electronic device 104 from the first external electronic device 103 through the connection 110. For example, the electronic device 101 may transmit information on the file 150 and information on the URI 160 to the second external electronic device 104 through a connection 130 based on the information. For example, the second external electronic device 104 may store the file 150 based on the URI 160. For example, the file 150 stored in the second external electronic device 104 may be accessible using the URI 160.

For example, the electronic device 101 may transmit information on the URI 160 to the other electronic device 102 through the connection 140. For example, the other electronic device 102 may receive the file 150 from the second external electronic device 104 through a connection 145, based on accessing the file 150 stored in the second external electronic device 104 using the URI 160.

For example, the electronic device 101 may enhance accessibility of the other electronic devices 102 to the file 150, through the URI 160 obtained through communication with the first external electronic device 103 and a user interface displayed within the electronic device 101 for obtaining the URI 160. The URI 160 and the UI will be illustrated through the following descriptions.

Although FIG. 1 illustrates an example in which the first external electronic device 103 and the second external electronic device 104 are implemented as different devices, the first external electronic device 103 and the second external electronic device 104 may be implemented as a single device. Although not illustrated in FIG. 1, a third external electronic device for authenticating the access of the electronic device 101 to the first external electronic device 103 and/or the second external electronic device 104 may be included in the environment 100. For example, the third external electronic device may be used to manage a user account used for the upload of the file 150 through the URI 160. For example, the third external electronic device may be used to manage profile information of a user of the electronic device 101. However, it is not limited thereto.

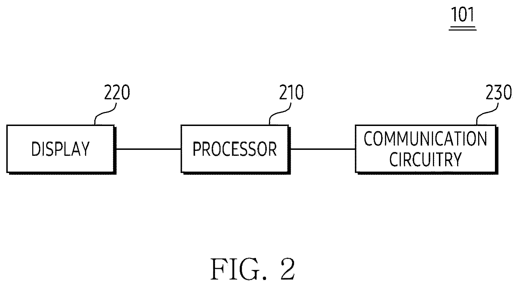

FIG. 2 is a simplified block diagram of an exemplary electronic device.

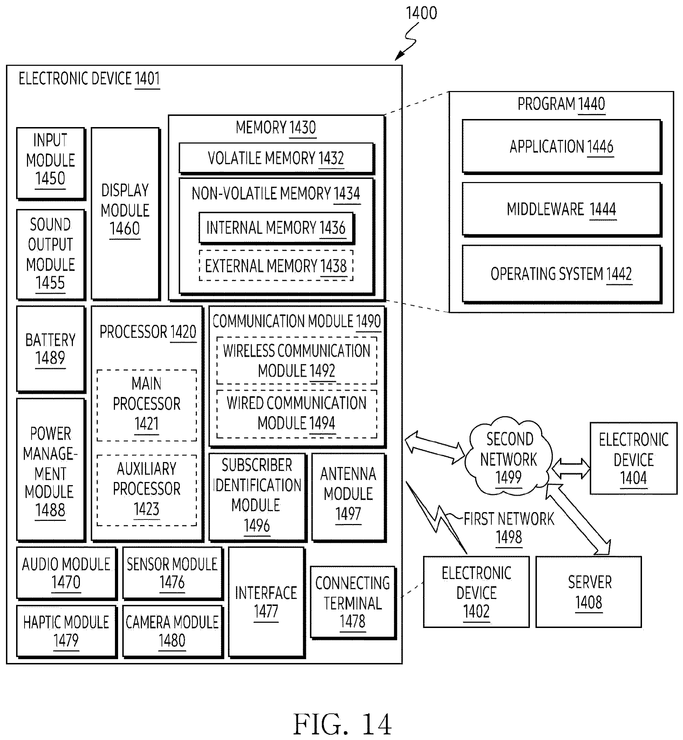

Referring to FIG. 2, an electronic device 101 may include a processor 210, a display 220, and communication circuitry 230. For example, the processor 210 may include at least a portion of a processor 1420 of FIG. 14. For example, the display 220 may include at least a portion of a display module 1460 of FIG. 14. For example, the communication circuitry 230 may include at least a portion of a communication module 1490 of FIG. 14. Although not illustrated in FIG. 2, the electronic device 101 may further include memory (e.g., at least a portion of memory 1430 of FIG. 14) configured to store one or more programs including instructions for executing operations to be illustrated below. The instructions may be executed by the processor 210. However, it is not limited thereto.

For example, the processor 210 may be operably coupled to each of the display 220 and the communication circuitry 230. For example, the processor 210 being operably coupled to each of the display 220 and the communication circuitry 230 may indicate that the processor 210 is directly connected to each of the display 220 and the communication circuitry 230. For example, the processor 210 being operably coupled to each of the display 220 and the communication circuitry 230 may indicate that the processor 210 is connected to each of the display 220 and the communication circuitry 230 through another component of the electronic device 101. For example, the processor 210 being operably coupled to each of the display 220 and the communication circuitry 230 may indicate that each of the display 220 and the communication circuitry 230 operates based on instructions executed by the processor 210. For example, the processor 210 being operably coupled to each of the display 220 and the communication circuitry 230 may indicate that each of the display 220 and the communication circuitry 230 is controlled by the processor 210. However, it is not limited thereto.

For example, the processor 210 may execute operations for sharing the file 150. For example, the processor 210 may execute operations to obtain the URI 160 used to access the file 150. For example, the operations to obtain the URI 160 may be executed through a user interface of a software application for sharing files.

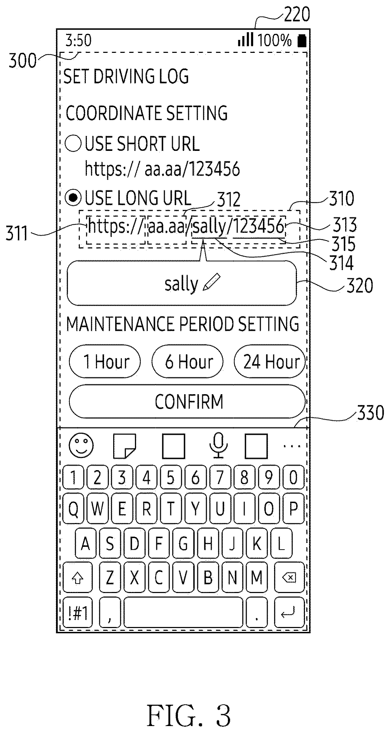

For example, the processor 210 may display, through the display 220, a text input field for setting a path part in a uniform resource identifier (URI) (e.g., the URI 160) within the UI of the software application. The text input field in the UI may be illustrated through FIG. 3.

FIG. 3 illustrates an example of a text input field for setting a path part in a uniform resource identifier (URI).

Referring to FIG. 3, the processor 210 may display a user interface 300. For example, the user interface 300 may be used to set a URI 310.

For example, the URI 310 may be used to access the file to be uploaded to the second external electronic device 104. For example, the URI 310 may include a protocol part 311, a host part 312, and a path part 313. For example, the protocol part 311 may include a name of a protocol used for accessing the file to be uploaded by the electronic device 101, such as "http", "https", "gofer", "telnet", "ftp", or "usenet". The host part 312 may include a name of a host and/or a domain in which the file is stored to be uploaded by the electronic device 101. The path part 313 may indicate a location of the file to be uploaded to the host (or to be stored in the host). The host part 312 and the path part 313 may be separated by a delimiter (or separator) "/". For example, the path part 313 may include the delimiter. However, it is not limited thereto.

For example, the path part 313 of the URI 310 may be randomly set to indicate a location of the file. Directly inputting the path part 313 of the randomly set URI 310 using an input means (e.g., a virtual keyboard or a physical keyboard) may cause inconvenience. For example, since the path part 313 of the randomly set URI 310 does not have a meaning recognized by a user, the path part of the randomly set URI 310 may cause inconvenience. For example, the user interface 300 may include a text input field 320 for setting the path part 313 of the URI 310 to reduce this inconvenience.

For example, the text input field 320 in the user interface 300 may be used to input a keyword recognized or set by the user into the path part 313. For example, the path part 313 may consist of an area 314 for the keyword and an area 315 for numerals. For example, the text input field 320 may be used to input or set the keyword to be located in the area 314 from among the area 314 and the area 315. For example, the text input field 320 may be visually associated with or visually linked with the area 314 for indicating that it is used to input the keyword.

For example, the processor 210 may display the virtual keyboard 330 together with the user interface 300, in response to a touch input 321 for the text input field 320. For example, the virtual keyboard 330 may be partially superimposed on the user interface 300. For example, the processor 210 may display the keyword (e.g., "sally") identified based on at least one user input received through the virtual keyboard 330 within the text input field 320. For example, the keyword displayed in the text input field 320 may be displayed in the area 314 or reflected in the area 314.

For example, the processor 210 may transmit first data indicating the keyword inputted into the text input field 320 (or the keyword displayed in the area 314) to the first external electronic device 103 through the communication circuitry 230. For example, the processor 210 may receive second data indicating a URI including a path part consisting of the keyword and numerals identified with respect to the keyword (or identified for the keyword), from the first external electronic device 103 through the communication circuitry 230. For example, the numerals may be included in the URI so that the URI is unique. For example, the numerals may be identified by the first external electronic device 103 so that a combination of the keyword and the numerals is unique. For example, the numerals identified by the first external electronic device 103 may be at least partially different from numerals displayed within the area 315. For example, the numerals (e.g., "123456) in the area 315 displayed with the text input field 320 may be intended to guide or inform a configuration of the path part 313. However, it is not limited thereto. For example, the numerals in the area 315 may be unique numerals identified by the first external electronic device 103 when displayed with the text input field 320.

For example, the processor 210 may upload, through the communication circuitry 230, at least one file for sharing, after the second data is received. For example, the uploaded at least one file may be stored in the second external electronic device 104. For example, the at least one uploaded file may be accessible using the URI including the path part consisting of the keyword and the numerals.

Although the above descriptions illustrate inputting the keyword into the area 314 through the text input part 320 and the virtual keyboard 330, the area 314 may include a recommended keyword or a preset keyword when the text input part 320 is displayed within the user interface 300.

For example, the recommended keyword may be identified based on a type of the at least one file. For example, the processor 210 may identify a type of the at least one file, based on identifying, from among a plurality of files in the electronic device 101, the at least one file to be uploaded. For example, the processor 210 may identify the recommended keyword based on the type. For example, the processor 210 may display the recommended keyword in the area 314. For example, the processor 210 may display the text input field 320 to which the recommended keyword is inputted. For example, the processor 210 may transmit the first data indicating the recommended keyword as the keyword to the first external electronic device 103, based at least in part on the text input field 320 to which the recommended keyword is inputted. For another example, the processor 210 may transmit the first data indicating the keyword at least partially changed from the recommended keyword to the first external electronic device 103, based at least in part on the text input field 320 to which the keyword at least partially changed from the recommended keyword is inputted, in response to at least one touch input received through the virtual keyboard 330. However, it is not limited thereto.

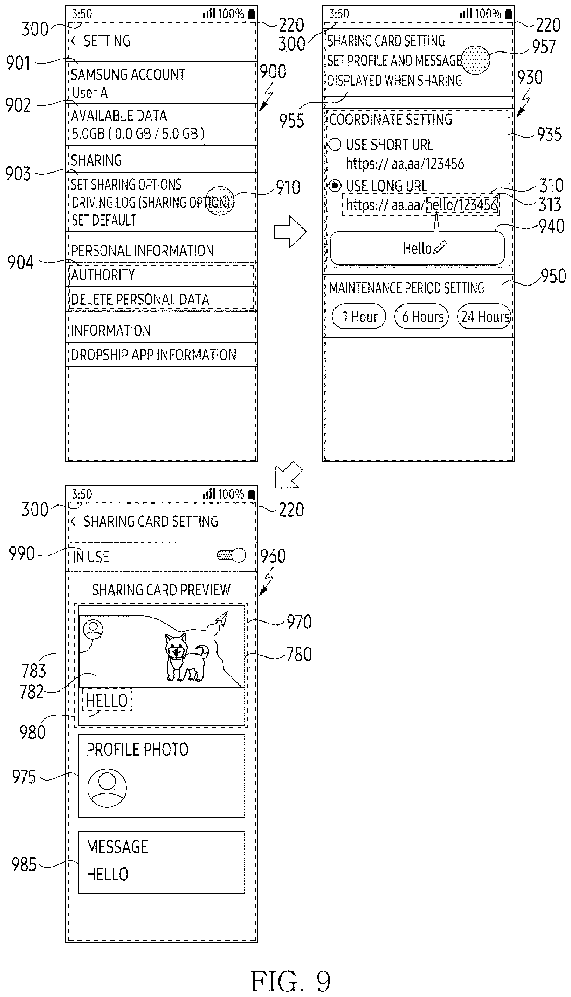

For example, the preset keyword may be identified based on a user input received before the text input unit 320 is displayed. The identification of the preset keyword will be illustrated through FIG. 9. For example, the processor 210 may display the preset keyword in the area 314. For example, the processor 210 may display the text input field 320 to which the preset keyword is inputted. For example, the processor 210 may transmit the first data indicating the preset keyword as the keyword to the first external electronic device 103, based at least in part on the text input field 320 to which the preset keyword is inputted. For another example, the processor 210 may transmit, to the first external electronic device 103, the first data indicating the keyword at least partially changed from the preset keyword, based at least in part on the text input field 320 to which the keyword at least partially changed from the preset keyword is inputted, in response to at least one touch input received through the virtual keyboard 330. However, it is not limited thereto.

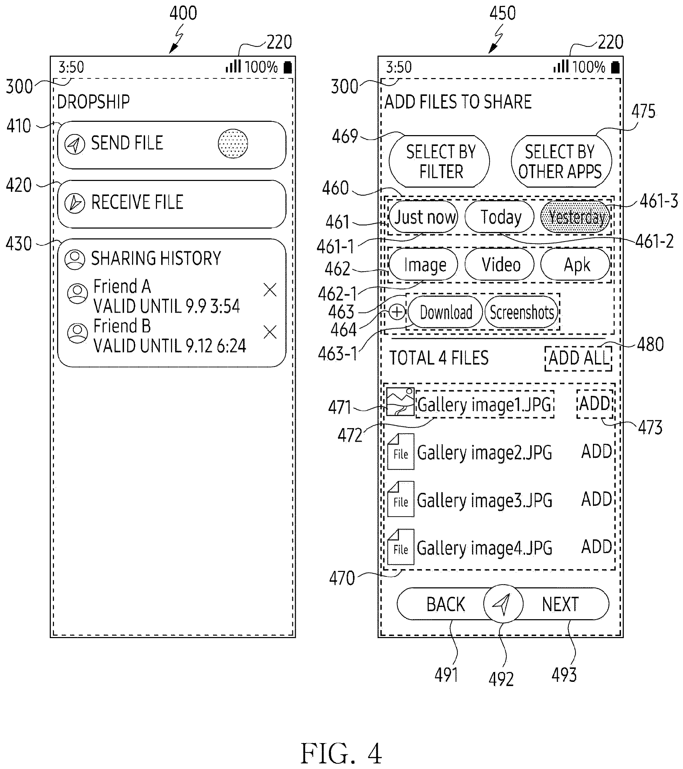

For example, the transmission of the first data may be executed before the at least one file is uploaded. For example, the transmission of the first data may be executed after the at least one file is identified. The identification of the at least one file may be illustrated through FIG. 4.

FIG. 4 illustrates an example of items respectively indicating search keywords for identifying a file to be uploaded from among a plurality of files.

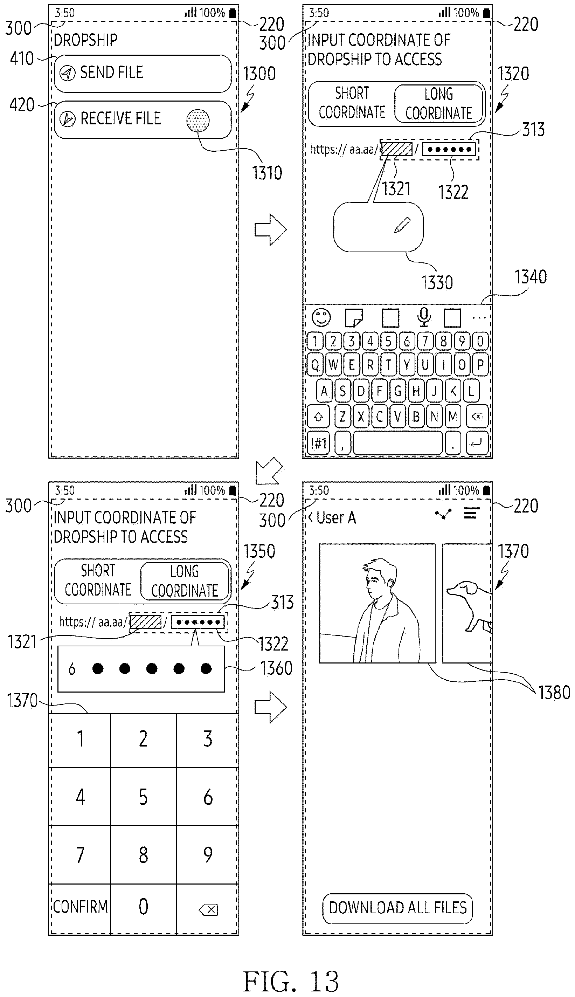

Referring to FIG. 4, the processor 210 may display the user interface 300 in a state 400. For example, the user interface 300 in the state 400 may be displayed in response to the execution of the software application for sharing a file. For example, the user interface 300 in state 400 may include an executable object 410 for transmitting a file to another electronic device (e.g., the other electronic device 102), an executable object 420 for receiving a file, and at least one executable object 430 for using again a file sharing history (or file transmission history) that was executed before the state 400 is provided. For example, the at least one executable object 430 may be used to identify a file that was transmitted before the state 400 is provided. The reception of the file through the executable object 420 will be illustrated through FIG. 13.

For example, in the state 400, the processor 210 may receive a user input 411 for the executable object 410. The processor 210 may change the state 400 to a state 450, in response to the user input 411.

In the state 450, the processor 210 may display, within the user interface 300, items 460 for respectively indicating search keywords for identifying, from among a plurality of files stored in the electronic device 101 (or a plurality of files at least temporarily stored in the electronic device 101), a file to be uploaded. For example, each of the items 460 may be referred to as a chip in terms of being a visual object having a circular shape. For example, each of the items 460 may be displayed based on a user input indicating to select a menu 469 among the menu 469 and a menu 475.

Although not illustrated in the state 450 of FIG. 4, the processor 210 may display a list of other software applications providing a function of identifying a file to be uploaded based on a user input indicating to select the menu 475 among the menu 469 and the menu 475. The processor 210 may identify one software application (e.g., a software application for managing images stored in the electronic device 101) among the other software applications, based on a user input received through the list. The processor 210 may display another user interface of the identified software application based on the identification. For example, the file to be uploaded may be identified based on a user input received through the other user interface. However, it is not limited thereto.

For example, the items 460 displayed within the user interface 300 in the state 450 may be arranged based on predetermined criteria. For example, a row in which a first set of items 461 among the items 460 are arranged may be different from a row in which a second set of items 462 among the items 460 are arranged. For example, the row in which the first set of items 461 among the items 460 are arranged may be different from a row in which a third set of items 463 among the items 460 are arranged. For example, the row in which the second set of items 462 among the items 460 are arranged may be different from the row in which the third set of items 463 among the items 460 are arranged.

For example, each of the first set of items 461 may indicate a predetermined time interval. For example, an item 461-1 among the first set of items 461 may be used to identify a file obtained within a time interval between a first timing at which the user interface 300 in the state 450 is displayed and a second timing that is a predetermined time (e.g., 10 minutes) before the first timing. For example, an item 461-2 among the first set of items 461 may be used to identify a file obtained today. For example, each of remaining items among the first set of items 461 may indicate another time interval that is at least partially different from a time interval indicated by each of the item 461-1 and the item 461-2.

For example, each of the second set of items 462 may indicate a type of file. For example, an item 462-1 among the second set of items 462 may be used to identify a file that is an image. For example, each of remaining items among the second set of items 462 may indicate another type that is at least partially different from a type indicated by the item 462-1.

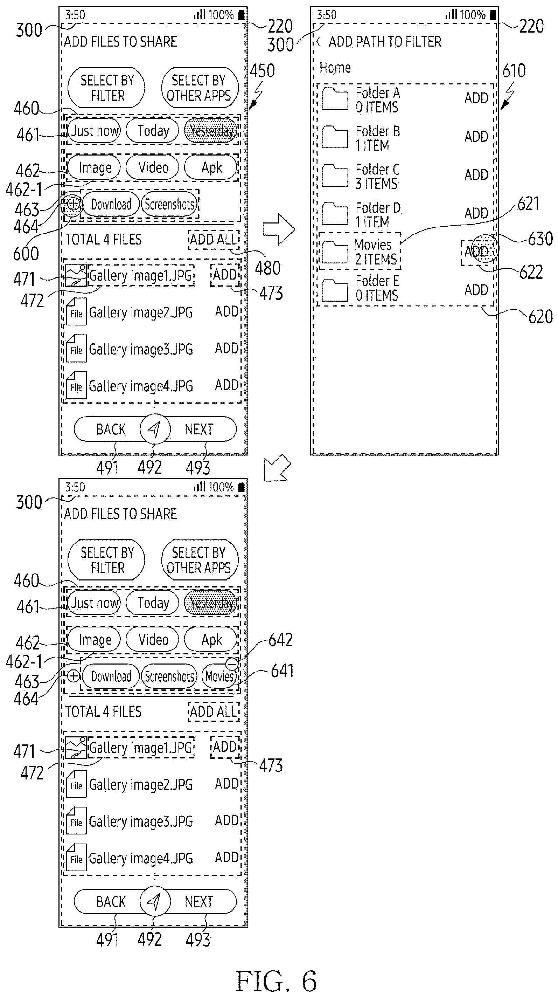

For example, each of the third set of items 463 may indicate a location of file in the electronic device 101. For example, an item 463-1 among the third set of items 463 may be used to identify a file located in a download folder in the electronic device 101. For example, unlike the first set of items 461 and the second set of items 462, the third set of items 463 may be added based on a user input. For example, the user interface 300 in the state 450 may include an executable object 470 adjacent to the third set of items 463. The executable object 470 will be illustrated through FIG. 6.

For example, the user interface 300 in the state 450 may include visual objects 470 respectively indicating identified files from among the plurality of files, based on a user input indicating to select at least a portion of items 460. For example, the visual objects 470 may respectively indicate files identified based on a user input indicating to select an item 461-3. For example, each of the visual objects 470 may include a thumbnail image 471 of each of the files, information 472 on each of the files, and an executable object 473 for identifying whether to upload each of the files. However, it is not limited thereto. For example, the user interface 300 in the state 450 may include an executable object 480 for setting all of the files as files to be uploaded. For example, the executable object 480 may be adjacent to the visual objects 470. However, it is not limited thereto.

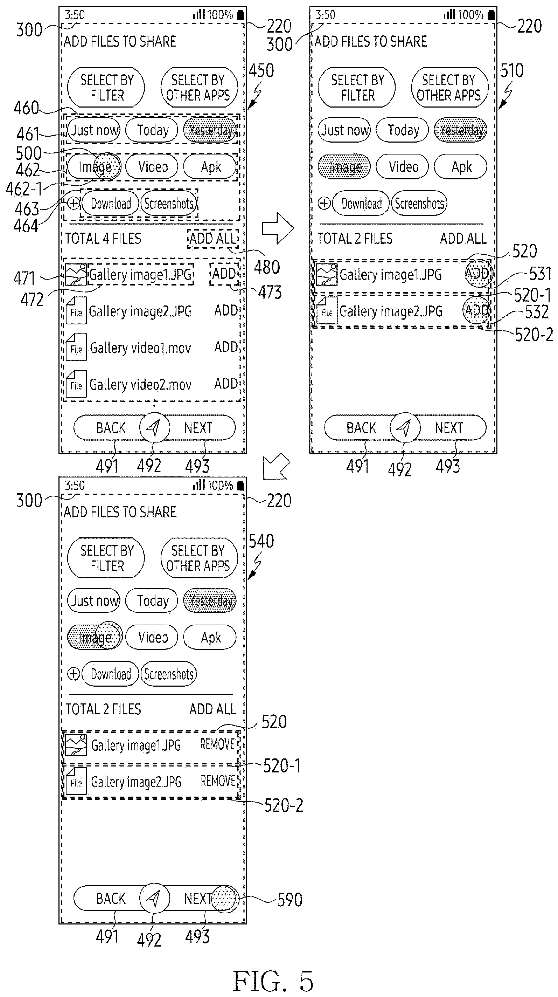

For example, the processor 210 may change the state 450 to another state in response to a user input. The other state may be illustrated through FIGS. 5 and 6.

FIG. 5 illustrates an example of identifying at least one file using at least a portion of items.

Referring to FIG. 5, in the state 450, the processor 210 may receive a user input 500 indicating to select an item 462-1. The processor 210 may change the state 450 to a state 510, in response to the user input 500. In the state 510, the user interface 300 may include visual objects 520 respectively indicating files further corresponding to criteria indicated by the item 462-1. For example, the visual objects 520 may be a portion of the visual objects 470.

In the state 510, the processor 210 may respectively receive a user input 531 indicating uploading a file indicated by a visual object 520-1 among visual objects 520 and a user input 532 indicating uploading a file indicated by a visual object 520-2 among visual objects 520. The processor 210 may change the state 510 to a state 540, in response to the user input 531. For example, unlike the visual object 520-1 and the visual object 520-2 in the state 510, the visual object 520-1 and the visual object 520-2 in the state 540 may represent uploading a file indicated by each of the visual object 520-1 and the visual object 520-2.

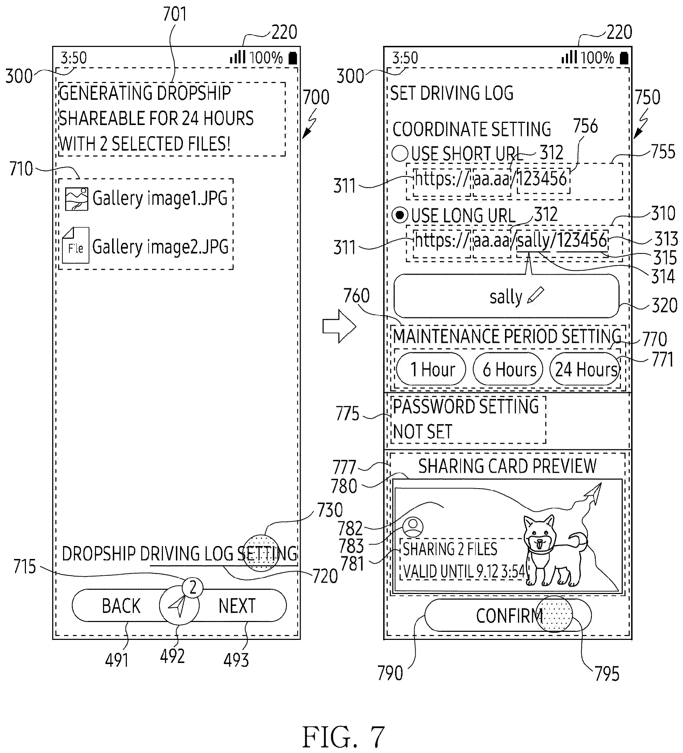

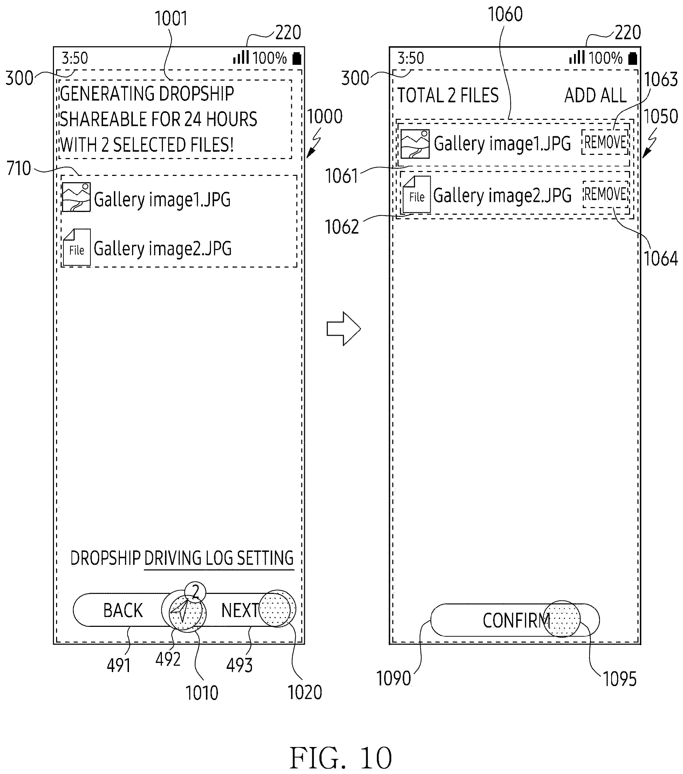

For example, the user interface 300 in each of the state 450, the state 510, and the state 540 may include an executable object 491, an executable object 492, and an executable object 493. For example, the executable object 491 may be used to change or restore each of the state 450, the state 510, and the state 540 to the state 400. For example, the executable object 492 may be used to change each of the state 450, the state 510, and the state 540 to another state. For example, the executable object 492 may be used when the at least one file to be uploaded is identified. The other state will be illustrated through FIG. 10. For example, the executable object 493 may be used to change each of the state 450, the state 510, and the state 540 to another state. The other state will be illustrated through FIG. 7.

FIG. 6 illustrates an example of generating a new item.

Referring to FIG. 6, in the state 450, the processor 210 may receive a user input 600 for the executable object 470. The processor 210 may change the state 450 to a state 610, in response to a user input 600. In the state 610, the user interface 300 may include visual objects 620 respectively indicating folders included in the electronic device 101. For example, each of the visual objects 620 may include information 621 that indicates a name of each of the folders and the number of files included in each of the folders, and an executable object 622 for adding an item indicating each of the folders to the third set of items 463. For example, in the state 610, the processor 210 may receive a user input 630 for an executable object 622 of a visual object indicating one folder (e.g., "Movies" folder) from among the folders. The processor 210 may change the state 610 to a state 640, in response to the user input 630. In the state 640, the processor 210 may include a third set of items 463 further including an item 641. For example, the item 641 may include an executable object 642 for removing an item 651 from the third set of items 463. However, it is not limited thereto.

Referring back to FIG. 5, the processor 210 may receive a user input 590 for the executable object 493 in the state 540. The processor 210 may change the state 540 to another state, in response to the user input 590. The other state may be illustrated through FIG. 7.

FIG. 7 illustrates an example of a user interface including a text input field.

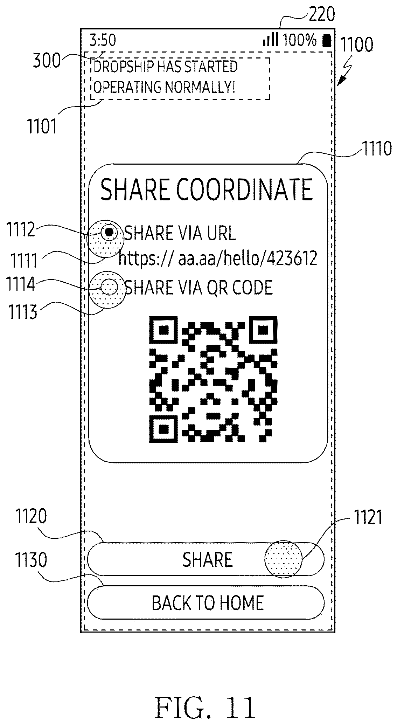

Referring to FIG. 7, the processor 210 may provide a state 700 changed from the state 540, in response to the user input 590. For example, in the state 700, the user interface 300 may include text 701 indicating uploading the at least one file identified through the state 540 for sharing. For example, the text 701 may inform or guide a period (e.g., 24 hours) in which the at least one file is uploaded and the number of the at least one file. For example, the period may be a period identified based on a user setting or a predetermined period. For example, in the state 700, the user interface 300 may include at least one visual object 710 indicating the at least one file. For example, in the state 700, the user interface 300 may include an executable object 491, an executable object 492, and an executable object 493. For example, the executable object 491 may be used for restoration to the state 540. For example, the executable object 492 may further include an indicator 715 (e.g., badge) indicating the number of the at least one file. The executable object 429 may be used to change the state 700 to another state. The other state will be illustrated through FIG. 10. For example, the executable object 493 may be used to change the state 700 to another state being after the state 700. The other state will be illustrated through FIG. 11.

For example, in the state 700, the user interface 300 may include an executable object 720. For example, the processor 210 may receive a user input 730 for the executable object 720 in the state 700. The processor 210 may change the state 700 to a state 750, in response to the user input 730. In the state 750, the user interface 300 may include a text input field 320. In the state 750, the user interface 300 may include a URI 310. In the state 750, the user interface 300 may include a URI 755 reduced with respect to the URI 310. For example, unlike the URI 310, the URI 755 in the state 750 may include a path part 756 including only numerals. For example, the numerals in the path part 756 in the state 750 may be intended to guide or inform a configuration of the path part 756, like the numerals in the area 315 illustrated through the description of FIG. 3. However, it is not limited thereto. For example, the numerals in the path part 756 may be unique numerals identified by the first external electronic device 103 when the state 750 is provided.

The following descriptions illustrate operations when the URI 310 among the URI 310 and the URI 755 is used, but this is for convenience of explanation. When the URI 755 is used, operations similar to those exemplified through the descriptions below may be caused within the electronic device 101.

For example, in the state 750, the user interface 300 may provide a field 760 for setting a period in which the upload of the at least one file will be maintained. For example, the field 760 may include items 770 respectively indicating candidate periods in which the upload of the at least one file will be maintained. For example, the upload of the at least one file may be maintained during a candidate period indicated by one an item identified based on a user input, among the items 770.

For example, in the state 750, the user interface 300 may include a field 775 for setting a password to be used when accessing the at least one file uploaded using the URI 310 (or the URI 755). For example, the password may be distinct from numerals in the path part 315 in the URI 310 (or the URI 755).

For example, in the state 750, the user interface 300 may include, in a preview field 777, an executable object 780 that is provided together when information indicating the URI 310 (or the URI 755) at least partially identified through the state 750 is transmitted from the electronic device 101 to a reception device. For example, the reception device may be another electronic device (e.g., the other electronic device 102) or the electronic device 101.

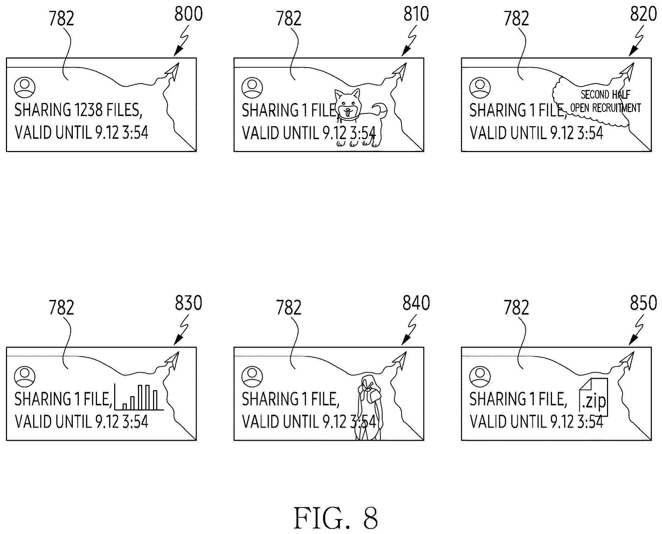

For example, the executable object 780 may be used to access the at least one file by at least partially using the URI 310 (or the URI 755) through the state 750. The executable object 780 may include at least one visual element 781 indicating the number of the at least one file and a period in which the upload of the at least one file is maintained (or period accessible to the at least one file), and a thumbnail image 782. The executable object 780 may include a profile image 783 of a user of the electronic device 101. For example, the thumbnail image 782 may be identified based on the at least one file. For example, thumbnail image 782 may have various representations based on the at least one file. The various representations of thumbnail image 782 may be illustrated through FIG. 8.

FIG. 8 illustrates an example of a thumbnail image in an executable object displayed together with information indicating a URI.

Referring to FIG. 8, the thumbnail image 782 may have a predetermined representation, such as a state 800. For example, when common information of the at least one file is not identified, the thumbnail image 782 may be represented as in the state 800.

For example, thumbnail image 782 may correspond to an image included in the at least one file, such as a state 810. For example, when an image for indicating the at least one file is included in the at least one file, the thumbnail image 782 may be represented as in the state 810.

For example, the thumbnail image 782 may at least partially include a preview of the at least one file, such as a state 820. For example, when a preview may be obtained from the at least one file, the thumbnail image 782 may be represented as in the state 820.

For example, the thumbnail image 782 may at least partially include a reference image indicating a type of the at least one file, such as a state 830. For example, the reference image may be identified based on a type of the at least one file among a plurality of reference images respectively indicating each of a plurality of types. For example, when the at least one file corresponds to one of the plurality of reference images, the thumbnail image 782 may be represented as in the state 830.

For example, the thumbnail image 782 may represent information related to the at least one file, such as a state 840. For example, when the at least one file is recognized or a search for the at least one file is executed, the thumbnail image 782 may be represented as in the state 840.

For example, the thumbnail image 782 may represent a type of the at least one file, such as a state 850. For example, when a type of the at least one file is identified, the thumbnail image 782 may be represented as in the state 850.

Referring back to FIG. 7, the user interface 300 displayed in the state 750 and the executable object 780 in the user interface 300 may be set before the state 750 is provided. The setting may be provided through the user interface 300. The user interface 300 providing the setting may be illustrated through FIG. 9.

FIG. 9 illustrates an example of setting an executable object.

Referring to FIG. 9, the processor 210 may provide a state 900. For example, the user interface 300 in the state 900 may include fields for setting for sharing a file. For example, in the state 900, the user interface 300 may include a field 901 for setting a user account used for sharing a file. For example, in the state 900, the user interface 300 may include a field 902 to inform the amount of data usable for file sharing or the amount of data capable of being transmitted or received using cellular communication. For example, in the state 900, the user interface 300 may include a field 903 for setting the user interface 300 displayed in the state 750. For example, in the state 900, the user interface 300 may include a field 904 for setting privacy-related authority. For example, in the state 900, the processor 210 may receive a user input 910 for the field 903.

For example, the processor 210 may change the state 900 to a state 930, in response to the user input 910. In the state 930, the user interface 300 may include a field 935 for presetting a keyword to be included in an area 314 in the path part 313 in the URI 310 in the user interface 300 displayed in the state 750. For example, the field 935 may include a text input field 940 for inputting the keyword. Although not illustrated in FIG. 9, when a user input for the text input unit 940 is received, the processor 210 may display a virtual keyboard (e.g., the virtual keyboard 330) together with the user interface 300. For example, in the state 930, the user interface 300 may include a field 950 for setting a period for which the upload of file executed based on the state 750 is maintained. For example, in the state 930, the user interface 300 may include a field 955 for setting an executable object 780. For example, in the state 930, the processor 210 may receive a user input 957 for the field 955.

For example, the processor 210 may change the state 930 to a state 960 in response to a user input 975. In the state 960, the user interface 300 may include a field 970 for providing a preview of the executable object 780 set in the state 960. For example, in the state 960, the user interface 300 may include the field 975 for setting a profile image 783 within the executable object 780. For example, the profile image set through the field 975 may be displayed or reflected in the profile image 783 in the executable object 780 in the field 970. For example, in the state 960, the user interface 300 may include a field 985 for setting a message 980 within the executable object 780. For example, when a user input for the field 985 is received, the processor 210 may display a virtual keyboard (e.g., the virtual keyboard 330). For example, the message inputted through the virtual keyboard may be displayed or reflected in the message 980 in the field 970. For example, the thumbnail image 782 in the executable object 780 may be set through a user input indicating to select the thumbnail image 782 in the field 970. However, it is not limited thereto. For example, in the state 960, the user interface 300 may include a field 990 for setting whether to activate the executable object 780.

Referring back to FIG. 7, in the state 750, the user interface 300 may include an executable object 790 for completing the setting for uploading the at least one file. For example, in the state 750, the processor 210 may receive a user input 795 for the executable object 790.

For example, the processor 210 may change the state 750 to another state, in response to the user input 795. The other state may be illustrated through FIG. 10.

FIG. 10 illustrates an example of modifying a file to be uploaded.

Referring to FIG. 10, the processor 210 may change the state 750 to a state 1000 in response to the user input 795.

For example, in the state 1000, the user interface 300 may be similar to the state 700 of FIG. 7. For example, the user interface 300 may include at least one visual object 710 indicating the at least one file. For example, the user interface 300 may include an executable object 491, an executable object 492, and an executable object 493. For example, the user interface 300 may include text 1001 indicating uploading the at least one file identified through the state 750, for sharing.

For example, the processor 210 may receive a user input 1010 for the executable object 492 in the state 1000. For example, the processor 210 may change the state 1000 to a state 1050 in response to the user input 1010.

For example, in the state 1050, the user interface 300 may include at least one visual object 1060 indicating the at least one file. For example, the at least one visual object 1060 may include a visual object 1061 and a visual object 1062. The visual object 1061 may include an executable object 1063 for ceasing uploading a file indicated by the visual object 1061. The visual object 1062 may include an executable object 1064 for ceasing uploading a file indicated by the visual object 1062. For example, the processor 210 may cease uploading at least a portion of files, based on a user input received through the user interface 300 displayed in the state 1050. For example, in the state 1050, the user interface 300 may include an executable object 1090 for receiving a user input indicating to upload the at least one file. For example, when the at least one file is maintained in the state 1050, the processor 210 may change or restore the state 1950 to the state 1000, in response to the user input 1095 for the executable object 1090.

For example, the processor 210 may receive a user input 1020 for the executable object 493 in the state 1000, or a user input 744 for the executable object 493 in the state 700. For example, the processor 210 may change the state 700 or the state 1000 to another state, in response to the user input 744 or the user input 1020. The other state may be illustrated through FIG. 11.

FIG. 11 illustrates an example of a screen for identifying whether to display information indicating a URI using text or using a quick response (QR) code.

Referring to FIG. 11, the processor 210 may upload the at least one file, in response to the user input 744 or the user input 1020. For example, the processor 210 may provide a state 1100, in response to the user input 744 or the user input 1020. For example, in the state 1100, the user interface 300 may include text 1101 indicating that the at least one file is uploaded. For example, in the state 1100, the user interface 300 may include a screen (or field) 1110 to identify whether to represent information indicating the URI 310 using text or using a quick response (QR) code. For example, the screen 1110 may include an object 1112 for receiving a user input 1111 indicating to represent the information using text and an object 1113 for receiving a user input 1113 indicating to represent the information using a QR code. For example, in the state 1100, the user interface 300 may include an executable object 1120 for transmitting the information. For example, the processor 210 may transmit the information represented as text to a reception device based on the user input 1121 for the executable object 1120 that is received after the user input 1111 is received, and transmit the information represented as a QR code to the reception device based on the user input 1121 for the executable object 1120 that is received after the user input 1113 is received. The QR code may be obtained based on the user input 1121. For example, in the state 1100, the user interface 300 may include an executable object 1130 for changing the state 1100 to the state 400.

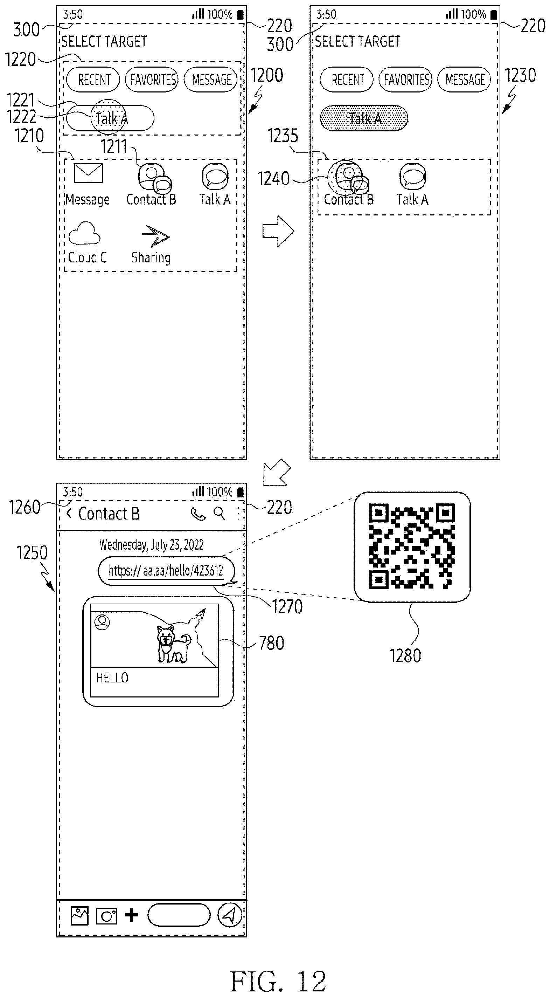

For example, for the transmission of the information, another software application distinct from the software application providing the user interface 300 may be used. For example, the identification of the other software application may be executed through the user interface 300. The execution may be illustrated through FIG. 12.

FIG. 12 illustrates an example of a list of software applications usable for transmitting information indicating a URI.

Referring to FIG. 12, the processor 210 may change the state 1100 to a state 1200, in response to the user input 1121. In the state 1200, the user interface 300 may include a list 1210 of software applications usable for transmission of the information. For example, a portion 1211 of executable objects in the list 1210 indicating each of the software applications may be configured to further identify a reception device in accordance with a history of past file sharing. For example, the list 1210 may be displayed together with items 1220 for filtering at least a portion of the executable objects in the list 1210. For example, in the state 1200, the processor 210 may receive a user input 1222 for an item 1221 among the items 1220.

For example, the processor 210 may change the state 1200 to a state 1230, in response to the user input 1222. In the state 1230, the processor 210 may display a user interface 300 including at least a portion 1235 of the executable objects related to a software application corresponding to the item 1221. For example, in the state 1230, the processor 210 may receive a user input 1250 indicating to select an executable object among at least a portion 1235 of the executable objects.

For example, the processor 210 may transmit the information to the reception device using another software application corresponding to the executable object, in response to the user input 1250. For example, the processor 210 may change the state 1230 to a state 1250, in response to the user input 1250. For example, in the state 1250, the processor 210 may display a user interface 1260 of the other software application. For example, the user interface 1260 may be superimposed on the user interface 300. However, it is not limited thereto.

For example, in the state 1250, the user interface 1260 may include the information. For example, when the user input 1111 is received, the information may be represented as text 1270. For example, when the user input 1113 is received, the information may be represented as a QR code 1280. For example, the user interface 1260 may include an executable object 780. For example, the executable object 780 may be displayed in the user interface 1260 with the text 1270 or the QR code 1280. For example, the executable object 780 may be used to access the uploaded at least one file using the URI 310. Although not illustrated in FIG. 12, the processor 210 may display a webpage indicated by the URI 310 within a user interface for displaying a web page, a user interface 300 to be exemplified through FIG. 13, or the user interface 1260, in response to a user input to the executable object 780. For example, the web page may be a web page for accessing the at least one file.

Although not illustrated in FIG. 12, the reception device may display a user interface corresponding to the user interface 1260 displayed in the state 1250, based on receiving the information. The reception device may access the at least one file by inputting the URI 310 through the user interface 300 of the software application installed in the reception device. The access may be illustrated through FIG. 13.

FIG. 13 illustrates an example of accessing at least one item using information indicating a URI.

Referring to FIG. 13, a processor of the reception device (e.g., the other electronic device 102) may display the user interface 300 through a display of the reception device, as in the state 1300. The user interface 300 in the state 1300 may at least partially correspond to the user interface 300 in the state 400. For example, in the state 1300, the user interface 300 may include an executable object 410 and an executable object 420. For example, the processor may receive a user input 1310 for the executable object 420.

For example, the processor may change the state 1300 to a state 1320 based on the user input 1310. In the state 1320, the user interface 300 may include an area 1321 and an area 1322 of the path part 313 of the URI 310. For example, the processor may display a text input field 1330 for inputting the keyword in the area 1321, in response to a user input for the area 1321 or a change to the state 1320. For example, the processor may display a virtual keyboard 1340 together with the user interface 300, in response to a user input for the text input field 1330 or in response to display of the text input field 1330. For example, the processor may input the keyword identified through the virtual keyboard 1340 into each of the text input field 1330 and the area 1321. For example, the processor may receive a user input for the area 1322. For example, the processor may change the state 1320 to a state 1350, in response to the user input.

For example, in the state 1350, the processor may display the user interface 300 that includes an input field 1360 for inputting the numerals into the area 1322, and a virtual keyboard 1370. For example, unlike the virtual keyboard 1340, the virtual keyboard 1370 may be in a state for inputting the numerals. For example, the input field 1360 may indicate remaining numerals that are not inputted through the virtual keyboard 1370. For example, after the numerals are inputted through the virtual keyboard 1370, the processor may display a web page identified using the URI 310 that includes the path part 313 consisting of the keyword and the numerals. For example, the processor may change the state 1350 to a state 1370.

For example, in the state 1370, the processor may display, in the user interface 300, at least one visual object 1380 indicating the uploaded at least one file in the web page.

Although not illustrated in FIG. 13, the processor may download the at least one file, in response to a user input for at least one visual object 1380.

As described above, the electronic device 101 may provide a service for sharing a file stored in the electronic device 101 through a URI that includes a path part consisting of a keyword and numerals, and a user interface for setting the URI. Since the service is executed based on a web, enhanced compatibility may be provided. Since the service is executed through the URI that includes a path part consisting of the keyword capable of recognizing meaning and numerals capable of being easily remembered, the service may provide an enhanced user experience. Since the service may set an executable object through the UI, the service may provide a customized user experience.

The electronic device 101 and the receiving device (e.g., the other electronic device 102) exemplified above may include at least a portion of components of the electronic device 1401 exemplified in FIG. 14.

FIG. 14 is a block diagram illustrating an electronic device in a network environment according to various embodiments.

Referring to FIG. 14, the electronic device 1401 in the network environment 1400 may communicate with an electronic device 1402 via a first network 1498 (e.g., a short-range wireless communication network), or at least one of an electronic device 1404 or a server 1408 via a second network 1499 (e.g., a long-range wireless communication network). According to an embodiment, the electronic device 1401 may communicate with the electronic device 1404 via the server 1408. According to an embodiment, the electronic device 1401 may include a processor 1420, memory 1430, an input module 1450, a sound output module 1455, a display module 1460, an audio module 1470, a sensor module 1476, an interface 1477, a connecting terminal 1478, a haptic module 1479, a camera module 1480, a power management module 1488, a battery 1489, a communication module 1490, a subscriber identification module(SIM) 1496, or an antenna module 1497. In some embodiments, at least one of the components (e.g., the connecting terminal 1478) may be omitted from the electronic device 1401, or one or more other components may be added in the electronic device 1401. In some embodiments, some of the components (e.g., the sensor module 1476, the camera module 1480, or the antenna module 1497) may be implemented as a single component (e.g., the display module 1460).

The processor 1420 may execute, for example, software (e.g., a program 1440) to control at least one other component (e.g., a hardware or software component) of the electronic device 1401 coupled with the processor 1420, and may perform various data processing or computation. According to an embodiment, as at least part of the data processing or computation, the processor 1420 may store a command or data received from another component (e.g., the sensor module 1476 or the communication module 1490) in volatile memory 1432, process the command or the data stored in the volatile memory 1432, and store resulting data in non-volatile memory 1434. According to an embodiment, the processor 1420 may include a main processor 1421 (e.g., a central processing unit (CPU) or an application processor (AP)), or an auxiliary processor 1423 (e.g., a graphics processing unit (GPU), a neural processing unit (NPU), an image signal processor (ISP), a sensor hub processor, or a communication processor (CP)) that is operable independently from, or in conjunction with, the main processor 1421. For example, when the electronic device 1401 includes the main processor 1421 and the auxiliary processor 1423, the auxiliary processor 1423 may be adapted to consume less power than the main processor 1421, or to be specific to a specified function. The auxiliary processor 1423 may be implemented as separate from, or as part of the main processor 1421.

The auxiliary processor 1423 may control at least some of functions or states related to at least one component (e.g., the display module 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an image signal processor or a communication processor) may be implemented as part of another component (e.g., the camera module 1480 or the communication module 1490) functionally related to the auxiliary processor 1423. According to an embodiment, the auxiliary processor 1423 (e.g., the neural processing unit) may include a hardware structure specified for artificial intelligence model processing. An artificial intelligence model may be generated by machine learning. Such learning may be performed, e.g., by the electronic device 1401 where the artificial intelligence is performed or via a separate server (e.g., the server 1408). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434.

The program 1440 may be stored in the memory 1430 as software, and may include, for example, an operating system (OS) 1442, middleware 1444, or an application 1446.

The input module 1450 may receive a command or data to be used by another component (e.g., the processor 1420) of the electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output sound signals to the outside of the electronic device 1401. The sound output module 1455 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1460 may visually provide information to the outside (e.g., a user) of the electronic device 1401. The display module 1460 may include, for example, a display, a hologram device, or a projector and control circuitry to control a corresponding one of the display, hologram device, and projector. According to an embodiment, the display module 1460 may include a touch sensor adapted to detect a touch, or a pressure sensor adapted to measure the intensity of force incurred by the touch.

The audio module 1470 may convert a sound into an electrical signal and vice versa. According to an embodiment, the audio module 1470 may obtain the sound via the input module 1450, or output the sound via the sound output module 1455 or a headphone of an external electronic device (e.g., an electronic device 1402) directly (e.g., wiredly) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device (e.g., the electronic device 1402) directly (e.g., wiredly) or wirelessly. According to an embodiment, the interface 1477 may include, for example, a high definition multimedia interface (HDMI), a universal serial bus (USB) interface, a secure digital (SD) card interface, or an audio interface.

A connecting terminal 1478 may include a connector via which the electronic device 1401 may be physically connected with the external electronic device (e.g., the electronic device 1402). According to an embodiment, the connecting terminal 1478 may include, for example, an HDMI connector, a USB connector, a SD card connector, or an audio connector (e.g., a headphone connector).

The haptic module 1479 may convert an electrical signal into a mechanical stimulus (e.g., a vibration or a movement) or electrical stimulus which may be recognized by a user via his tactile sensation or kinesthetic sensation. According to an embodiment, the haptic module 1479 may include, for example, a motor, a piezoelectric element, or an electric stimulator.

The camera module 1480 may capture a still image or moving images. According to an embodiment, the camera module 1480 may include one or more lenses, image sensors, image signal processors, or flashes.

The power management module 1488 may manage power supplied to the electronic device 1401. According to an embodiment, the power management module 1488 may be implemented as at least part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the application processor (AP)) and supports a direct (e.g., wired) communication or a wireless communication. According to an embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as Bluetooth^{™}, wireless-fidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The wireless communication module 1492 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1492 may support a high-frequency band (e.g., the mmWave band) to achieve, e.g., a high data transmission rate. The wireless communication module 1492 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1492 may support various requirements specified in the electronic device 1401, an external electronic device (e.g., the electronic device 1404), or a network system (e.g., the second network 1499). According to an embodiment, the wireless communication module 1492 may support a peak data rate (e.g., 20Gbps or more) for implementing eMBB, loss coverage (e.g., 1464dB or less) for implementing mMTC, or U-plane latency (e.g., 0.5ms or less for each of downlink (DL) and uplink (UL), or a round trip of 14ms or less) for implementing URLLC.

The antenna module 1497 may transmit or receive a signal or power to or from the outside (e.g., the external electronic device) of the electronic device 1401. According to an embodiment, the antenna module 1497 may include an antenna including a radiating element composed of a conductive material or a conductive pattern formed in or on a substrate (e.g., a printed circuit board (PCB)). According to an embodiment, the antenna module 1497 may include a plurality of antennas (e.g., array antennas). In such a case, at least one antenna appropriate for a communication scheme used in the communication network, such as the first network 1498 or the second network 1499, may be selected, for example, by the communication module 1490 (e.g., the wireless communication module 1492) from the plurality of antennas. The signal or the power may then be transmitted or received between the communication module 1490 and the external electronic device via the selected at least one antenna. According to an embodiment, another component (e.g., a radio frequency integrated circuit (RFIC)) other than the radiating element may be additionally formed as part of the antenna module 1497.

According to various embodiments, the antenna module 1497 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 coupled with the second network 1499. Each of the electronic devices 1402 or 1404 may be a device of a same type as, or a different type, from the electronic device 1401. According to an embodiment, all or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1401. The electronic device 1401 may provide the outcome, with or without further processing of the outcome, as at least part of a reply to the request. To that end, a cloud computing, distributed computing, mobile edge computing (MEC), or client-server computing technology may be used, for example. The electronic device 1401 may provide ultra low-latency services using, e.g., distributed computing or mobile edge computing. In another embodiment, the external electronic device 1404 may include an internet-of-things (IoT) device. The server 1408 may be an intelligent server using machine learning and/or a neural network. According to an embodiment, the external electronic device 1404 or the server 1408 may be included in the second network 1499. The electronic device 1401 may be applied to intelligent services (e.g., smart home, smart city, smart car, or healthcare) based on 5G communication technology or IoT-related technology.

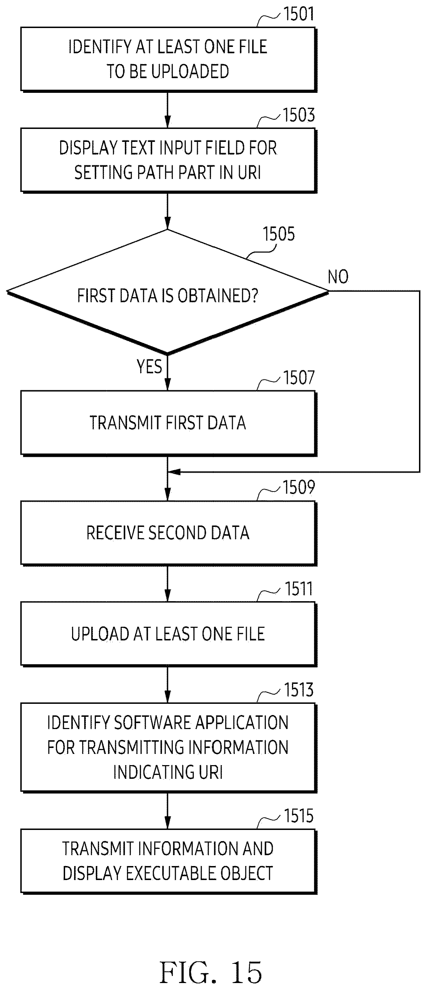

FIG. 15 is a flowchart illustrating a method of transmitting information indicating a URI, which includes a keyword inputted in a text input field and is used for accessing at least one file. The method may be executed by the processor 210 illustrated in FIG. 2 or the processor 1420 illustrated in FIG. 14.

Referring to FIG. 15, in operation 1501, the processor 210 may identify at least one file to be uploaded. For example, the at least one file may be identified through the user interface 300 exemplified through FIGS. 4 to 6. For another example, the at least one file may be identified through another software application (e.g., a software application for image management) distinct from a software application providing the user interface 300. However, it is not limited thereto.

In operation 1503, the processor 210 may display a text input field for setting a path part in a URI in the user interface 300, based at least in part on identifying the at least one file. For example, the text input field may be displayed in conjunction with at least a portion of the path part.

In operation 1505, the processor 210 may identify whether obtaining first data indicating a keyword inputted to the text input field. For example, obtaining the first data may include receiving, through the user interface 300, a user input indicating to confirm the keyword inputted through a virtual keyboard. For example, obtaining the first data may include receiving, through the user interface 300, a user input indicating to confirm a recommended keyword as the keyword. For example, not obtaining the first data may include receiving, through the user interface 300, a user input indicating to use the URI including the path part consisting of numerals for sharing the at least one file. However, it is not limited thereto.

For example, the processor 210 may execute operation 1507 based on identifying that the first data is obtained, and may execute operation 1509 based on identifying that the first data is not obtained.

In operation 1507, the processor 210 may transmit the first data to a server, based on obtaining the first data. For example, the first data may be transmitted to obtain numerals forming the path part together with the keyword. The server may receive the first data.

In operation 1509, the processor 210 may receive second data from the server.

For example, the second data may be transmitted from the server, in response to the first data. For example, when the second data is transmitted from the server in response to the first data, the second data may indicate the URI including the path part consisting of the keyword and the numerals identified based on the keyword (or assigned based on the keyword).

For example, the second data may be transmitted from the server, in response to a signal from the electronic device 101 that indicates not obtaining the first data. In this case, the second data may indicate the URI including the path part consisting of only numerals identified by the server.

In operation 1511, the processor 210 may upload the at least one file for sharing, after the second data is received. For example, the at least one file may be accessible through the URI.

In operation 1513, the processor 210 may identify a software application for transmitting information indicating the URI. For example, the application may be identified through the user interface 300 exemplified through FIG. 12.

In operation 1515, the processor 210 may transmit the information to the reception device based on the identification and display an executable object for accessing the at least one file using the URI. For example, the executable object may be displayed in the user interface of the identified software application. For example, the executable object may include at least one visual element indicating the number of the at least one file and a period accessible to the at least one file, and a thumbnail image. For example, the executable object may further include a message inputted through the user interface 300. For example, the thumbnail image in the executable object may at least partially represent a preview of the at least one file. For example, the thumbnail image may at least partially represent a type of the at least one file. However, it is not limited thereto.

As described above, the electronic device 101 may provide a service for sharing a file in the electronic device 101 with another electronic device, through the user interface 300. Since the user interface 300 may provide a function of selecting at least one file to be shared, a function of including a keyword in a URI for accessing the at least one file, and a function of selecting a software application for transmitting information indicating the URI, the electronic device 101 may provide an enhanced user experience through the user interface 300.

As described above, the operations may be combined as follows.

According to an embodiment, an electronic device may comprise communication circuitry (e.g., the communication circuitry 230), a display (e.g., the display 220), and a processor (e.g., the processor 210). According to an embodiment, the processor may be configured to display, via the display, in a user interface (UI) of a software application for sharing a file, a text input field for setting a path part in a uniform resource identifier (URI). According to an embodiment, the processor may be configured to transmit, to a server, through the communication circuitry, first data indicating a keyword inputted to the text input field. According to an embodiment, the processor may be configured to receive, from the server, through the communication circuitry, second data indicating a URI including the path part that consists of the keyword and numerals, the numerals identified with respect to the keyword. According to an embodiment, the processor may be configured to, after the second data is received, upload, through the communication circuitry, at least one file, for sharing. According to an embodiment, the uploaded at least one file may be accessible using the URI including the path part that consists of the keyword and the numerals.

According to an embodiment, the processor may be configured to display, via the display, in the UI, items for respectively indicating search keywords for identifying, from among a plurality of files stored in the electronic device, a file to be uploaded. According to an embodiment, the processor may be configured to, based at least in part on a user input indicating to select at least a portion of the items, identify the at least one file from among the files. According to an embodiment, the processor may be configured to, after the at least one file is identified, display, via the display, the text input filed in the UI.

According to an embodiment, the processor may be configured to identify a type of the at least one file identified based at least in part on the user input. According to an embodiment, the processor may be configured to, based on the identified type, identify a recommended keyword. According to an embodiment, the processor may be configured to display, via the display, the text input field to which the recommended keyword is inputted. According to an embodiment, the processor may be configured to, based at least in part on a user input received while the text input field to which the recommended keyword is inputted is displayed, transmit, to the server, through the communication circuitry, the first data indicating the recommended keyword as the keyword.

According to an embodiment, the processor may be configured to receive a touch input on the text input field to which the recommended keyword is inputted. According to an embodiment, the processor may be configured to, in response to the touch input, display a virtual keyboard partially superimposed on the UI. According to an embodiment, the processor may be configured to, in response to at least one touch input received via the virtual keyboard, display, via the display, the text input field to which the keyword at least partially changed from the recommended keyword is inputted. According to an embodiment, the processor may be configured to transmit, to the server, through the communication circuitry, the first data indicating the keyword at least partially changed from the recommended keyword.

According to an embodiment, the processor may be configured to display, in the UI, a list of software applications that are usable for transmitting information indicating the URI including the path part consisting of the keyword and the numerals. According to an embodiment, the processor may be configured to, using another software application identified from among the software applications based at least in part on a user input on the list, transmit, to a reception device, the information. According to an embodiment, the processor may be configured to display, in another UI of the other software application, an executable object for accessing the at least one file using the URI including the path part consisting of the keyword and the numerals.

According to an embodiment, the executable object may include at least one visual element indicating a number of the at least one file, and a period accessible to the at least one file and a thumbnail image. According to an embodiment, the processor may be configured to display a preview field of the executable object, with the text input field, in the UI.

According to an embodiment, the executable object displayed in the other UI may include a profile image of a user of the electronic device, that is inputted through the UI.

According to an embodiment, the executable object displayed in the other UI may include a message inputted through the UI.

According to an embodiment, the thumbnail image may at least partially represent a preview of the at least one file.

According to an embodiment, the thumbnail image may at least partially represent a type of the at least one file.

According to an embodiment, the processor may be configured to, after the second data is received, receive a user input indicating to upload the at least one file. According to an embodiment, the processor may be configured to, in response to the user input, upload the at least one file, and display, via the display, in the UI, a screen for identifying whether representing the information using text or using a quick response (QR) code. According to an embodiment, the processor may be configured to, in response to a first user input received through the screen, display, in the other UI, with the executable object, the text representing the URI including the path part consisting of the keyword and the numerals. According to an embodiment, the processor may be configured to, in response to a second user input received through the screen, display, in the other UI, with the executable object, the QR code representing the URI including the path part consisting of the keyword and the numerals.

According to an embodiment, the QR code may be obtained based on the second user input.

According to an embodiment, the URI may consist of the path part consisting of the keyword and the numerals, and a host part.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
memory configured to store instructions;
communication circuitry;
a display; and
a processor configured to execute the instructions to cause the electronic device to:
display, via the display, in a user interface (UI) of a software application for sharing a file, a text input field for setting a path part in a uniform resource identifier (URI);
transmit, to a server, through the communication circuitry, first data indicating a keyword inputted to the text input field;
receive, from the server, through the communication circuitry, second data indicating an URI including the path part that consists of the keyword and numerals, the numerals identified with respect to the keyword; and
after the second data is received, upload, through the communication circuitry, at least one file, for sharing,
wherein the uploaded at least one file is accessible using the URI including the path part that consists of the keyword and the numerals.

2. The electronic device of claim 1, wherein the processor is configured to execute the instructions to cause the electronic device to:
display, via the display, in the UI, items for respectively indicating search keywords for identifying, from among a plurality of files stored in the electronic device, a file to be uploaded;
based at least in part on a user input indicating to select at least a portion of the items, identify the at least one file from among the files; and
after the at least one file is identified, display, via the display, the text input filed in the UI.

3. The electronic device of claim 2, wherein the processor is configured to execute the instructions to cause the electronic device to:
identify a type of the at least one file identified based at least in part on the user input;
based on the identified type, identify a recommended keyword;
display, via the display, the text input field to which the recommended keyword is inputted; and
based at least in part on a user input received while the text input field to which the recommended keyword is inputted is displayed, transmit, to the server, through the communication circuitry, the first data indicating the recommended keyword as the keyword.

4. The electronic device of claim 3, wherein the processor is configured to execute the instructions to cause the electronic device to:
receive a touch input on the text input field to which the recommended keyword is inputted;
in response to the touch input, display a virtual keyboard partially superimposed on the UI;
in response to at least one touch input received via the virtual keyboard, display, via the display, the text input field to which the keyword at least partially changed from the recommended keyword is inputted; and
transmit, to the server, through the communication circuitry, the first data indicating the keyword at least partially changed from the recommended keyword.

5. The electronic device of claim 1, wherein the processor is further configured to execute the instructions to cause the electronic device to:
display, in the UI, a list of software applications that are usable for transmitting information indicating the URI including the path part consisting of the keyword and the numerals;
using another software application identified from among the software applications based at least in part on a user input on the list, transmit, to a reception device, the information; and
display, in another UI of the other software application, an executable object for accessing the at least one file using the URI including the path part consisting of the keyword and the numerals.

6. The electronic device of claim 5, wherein the executable object includes at least one visual element indicating a number of the at least one file, and a period accessible to the at least one file and a thumbnail image.

7. The electronic device of claim 6, wherein the processor is configured to display a preview field of the executable object, with the text input field, in the UI.

8. The electronic device of claim 6, wherein the executable object displayed in the other UI further includes a profile image of a user of the electronic device, that is inputted through the UI.

9. The electronic device of claim 6, wherein the executable object displayed in the other UI further includes a message inputted through the UI.

10. The electronic device of claim 6, wherein the thumbnail image at least partially represents a preview of the at least one file.

11. The electronic device of claim 6, wherein the thumbnail image at least partially represents a type of the at least one file.

12. The electronic device of claim 5, wherein the processor is configured to execute the instructions to cause the electronic device to:
after the second data is received, receive a user input indicating to upload the at least one file;
in response to the user input, upload the at least one file, and display, via the display, in the UI, a screen for identifying whether representing the information using text or using a quick response (QR) code;
in response to a first user input received through the screen, display, in the other UI, with the executable object, the text representing the URI including the path part consisting of the keyword and the numerals; and
in response to a second user input received through the screen, display, in the other UI, with the executable object, the QR code representing the URI including the path part consisting of the keyword and the numerals.

13. The electronic device of claim 12, wherein the QR code is obtained based on the second user input.

14. A method executed in an electronic device including communication circuitry and a display, the method comprising:
displaying, via the display, in a user interface (UI) of a software application for sharing a file, a text input field for setting a path part in a uniform resource identifier (URI);
transmitting, to a server, through the communication circuitry, first data indicating a keyword inputted to the text input field;
receiving, from the server, through the communication circuitry, second data indicating an URI including the path part that consists of the keyword and numerals, the numerals identified with respect to the keyword; and
after the second data is received, uploading, through the communication circuitry, at least one file, for sharing,
wherein the uploaded at least one file is accessible using the URI including the path part that consists of the keyword and the numerals.

15. A non-transitory computer readable medium storing one or more programs, the one or more programs including instructions which, when executed by a processor of an electronic device comprising communication circuitry and a display, cause the electronic device to:
display, via the display, in a user interface (UI) of a software application for sharing a file, a text input field for setting a path part in a uniform resource identifier (URI);
transmit, to a server, through the communication circuitry, first data indicating a keyword inputted to the text input field;
receive, from the server, through the communication circuitry, second data indicating an URI including the path part that consists of the keyword and numerals, the numerals identified with respect to the keyword; and
after the second data is received, upload, through the communication circuitry, at least one file, for sharing,
wherein the uploaded at least one file is accessible using the URI including the path part that consists of the keyword and the numerals.
